# EUROPEAN PATENT SPECIFICATION

(11) **EP 1 263 559 B1**
(45) Date of publication and mention of the grant of the patent: **10.05.2006**
(21) Application number: 01911873.6
(22) Date of filing: 12.03.2001
(51) Int. Cl.: B29C 33/40, B29K 33/00

(54) **METHOD OF MAKING ACRYLIC MOULDED ARTICLES**
VERFAHREN ZUR HERSTELLUNG VON ACRYLFORMTEILEN
PROCEDE DE FABRICATION D'ARTICLES ACRYLIQUES MOULES

(30) Priority: 11.03.2000 GB 0005781
(43) Date of publication of application: 11.12.2002
(73) Proprietor: Lucite International UK Limited, Southampton, Hampshire SO14 4BP (GB)
(72) Inventor: MORRIS, Michael, Galgate Lancaster LA2 0NX (GB); MURPHY, Anthony, Failsworth, Manchester M35 9GE (GB); PAGE, Jonathon, Mark, Morron, London SW14 8RD (GB)
(74) Representative: Frith, Richard William
(86) International application number: PCT/GB2001/001066
(87) International publication number: WO 2001/068339

(56) References cited:
- GB-A- 2 145 028
- GB-A- 2 241 191
- US-A- 3 644 132
- US-A- 5 129 804
- PATENT ABSTRACTS OF JAPAN vol. 016, no. 191 (M-1245), 8 May 1992 (1992-05-08) & JP 04 027509 A (INAX CORP), 30 January 1992 (1992-01-30)
- PATENT ABSTRACTS OF JAPAN vol. 010, no. 295 (M-523), 7 October 1986 (1986-10-07) & JP 61 108520 A (MITSUBISHI RAYON CO LTD), 27 May 1986 (1986-05-27)

## Description

This invention relates to acrylic moulded articles and provides a method of making an acrylic moulded article, a method of making a mould and a novel mould.

Acrylic resins are widely used for articles such as kitchen worktops, sinks, vanity basins, shower trays, baths, shop counters, food preparation surfaces and exterior cladding of buildings and walls, for example partitioning walls. A known apparatus for moulding for example a sink, utilises a mould which comprises male and female mould halves, the interior surfaces of which are coated with nickel. The apparatus incorporates heating arrangements for heating the mould halves, thereby to effect curing of a polymerisable acrylic formulation which may be poured into a mould cavity defined between the mould halves. The nickel surfaces act as an excellent release material for the polymerisable acrylic formulation such that an acrylic article can easily be removed from the mould after polymerisation and, thereafter, the mould can be re-used. Disadvantageously, however, the moulds described are large and expensive and are, therefore, only economic for high volume production of acrylic articles.

JP-A-61108520 relates to forming a non-glare surface with favourable duplicability of surface roughness by polymerising methyl methacrylate on a 1,6-hexane diacrylate/benzoin ethyl ether film such that the film is transferred to the polymethyl methacrylate.

It is an object of the present invention to address problems associated with known moulds for making acrylic articles.

According to a first aspect of the invention, there is provided a method of making a filled acrylic moulded article, the method using a mould which includes a mould body having, as an integral part thereof, a surface material, wherein said surface material defines at least part of the shape of the article to be moulded and said surface material includes a polymeric material which has a heat distortion temperature of at least 70°C measured at 0.46 N/m² and 455,054 Pa (66 psi) as described according to ASTM D648 and said surface material does not substantially absorb monomeric material during said method whereby the surface material absorbs less than 10% by wt of monomeric material when the weight gain of a sample of the surface material in monomeric material is measured over 24 hours at 25 °C, the method including the step of contacting the surface material of the mould body with a polymerisable formulation which includes a filler and a monomeric material arranged to produce an acrylic polymer when polymerised and allowing the polymerisable formulation to cure and form said filled acrylic moulded article, and removing the filled moulded article from the mould body by disengaging said filled moulded article from the surface material, whilst leaving said surface material as an integral part of said mould body.

Preferably, said surface material is not a removably attachable component of said mould body. Said surface material is preferably a unitary part of said mould body.Said surface material is preferably a fixed part of said mould body. Thus, it is preferably not readily detachable from the mould body - it is suitably a permanent part thereof. For example, said surface material does not comprise a liner material which may be detached from a mould when a moulded article is removed from the mould. Suitably, therefore, the surface material is arranged to remain as an integral part of the mould body after removal of a moulded article from the mould.

In a first embodiment, said surface material may be an integral part of said mould body by virtue of it being fixed, for example substantially irremovably fixed relative to a support means which is part of said mould body. Preferably, a layer of said surface material is fixed relative to a layer of support material and, suitably, said support material is a component of said support means. Any suitable means may be used for fixing said layers together. Preferably, a physical means is provided. More preferably, said layers define a laminate material. Said laminate material may be made by calendering said surface material and said support material together. Said laminate material may have a thickness of at least 1mm, suitably at least 2mm, preferably at least 3mm, more preferably at least 4mm. The thickness may be less than 20mm, suitably less than 15mm, preferably less than 10mm, preferably 8mm or less. The thickness may be selected so that it is suitable for fabrication into a desired shape.

Preferably, said support material comprises a fibrous material which may be provided as a fabric. Any fabrics may be used which can be fixed to the surface material. Preferred support materials are compatible with, for example by being able to adhere to, reinforcing material as hereinafter described. Said support material preferably comprises glass fibre. In one embodiment, a layer of fabric contacts the surface material and, suitably, a layer of glass reinforced plastic (GRP), also referred to as fibreglass reinforced plastic (FRP) contacts said layer of fabric. The GRP is then suitably contacted with the reinforcing material hereinafter described.

Said support means of said first embodiment may include a support frame which is also suitably fixed relative to said surface material. Said support frame preferably has greater rigidity than said surface material and, more preferably, has greater rigidity than said laminate comprising said surface material and said support material. Said support frame is preferably substantially self-supporting. It preferably includes components made out of metal.

Said support means may include a reinforcing material which is, preferably, a reinforced plastics material, especially one comprising a thermosetting or thermoplastic resin and fibres, filaments or whiskers. Said reinforcing material is preferably adhered to part of the mould body. Where the mould body includes a support material, said reinforcing material is preferably adhered to said support material. Preferably, in this case, said support material and said reinforcing material include at least one common element which is preferably a fibrous material, for example of carbon fibre. However, said common element is preferably glass fibres. Thus, preferably, said reinforcing material includes glass fibres and, more preferably, is (GRP).

In a second embodiment, said surface material may be an integral part of the mould body by virtue of it being part of a self-supporting material which defines, at least in part, the shape of the article to be moulded. Preferably, said self-supporting material consists essentially of a single layer of said surface material. Thus, said self-supporting material suitably defines the surface of the mould body contacted with said polymerisable formulation. Preferably, said self-supporting material is shaped to define the entirety of at least one surface of said acrylic moulded article. Preferably, said self-supporting material defines a mould half, suitably for defining the entirety of one side of said acrylic moulded article. Said mould half preferably comprises a unitary piece of said self-supporting material, suitably with no joints being visible at any surface thereof which is contacted with the polymerisable formulation.

Said self-supporting material is preferably curved to define said mould body. A compound curve is preferably defined in said self-supporting material. Preferably, said self-supporting material includes a planar region and a curved region for example as are necessary to define a mould half for making a vanity unit comprising a bowl and a planar surface surrounding the bowl.

Said mould body of the second embodiment is preferably manufacturable by thermoforming, more preferably by vacuum forming. For example, said mould body may be manufactured using a sheet of material which is arranged to define said surface material by forming the sheet, suitably using heat and a vacuum, into the desired shape.

The thickness of said surface material may be at least 2mm, suitably at least 3mm, preferably at least 4mm. The thickness may be less than 10mm, suitably less than 8mm, especially less than 6mm. Suitably, the thickness of the surface material of the second embodiment is in the range 4-5mm, especially 4.5-5mm.

Preferably, said surface material and/or said mould body is/are not substantially thermally conducting.

Whilst the mould of the first aspect may include a single mould body which may therefore define a tray-like mould, it is preferred for said mould to comprise first and second mould bodies, for example male and female mould bodies, which may cooperate and define a mould cavity into which said polymerisable formulation may be input. In this event, securement means is preferably provided for releasably securing the first and second mould bodies together.

The heat distortion temperature of said polymeric material which defines said surface material may be measured at 0.46 N/m² and 66 psi as described according to ASTM D648. The heat distortion temperature of said surface material may be at least 74°C, suitably at least 78°C, preferably at least 82°C, more preferably at least 85°C. The heat distortion temperature may be less than 200°C, suitably less than 150°C, preferably less than 140°C, more preferably less than 130°C, especially less than 125°C.

If the surface material substantially absorbs monomeric material, then there will be a tendency for an acrylic moulded article to stick to the mould, making its removal difficult and, furthermore, preparation of the surface material prior to making a subsequent acrylic moulded article will be time-consuming. Additionally, if the preparation is unsatisfactory, for example by not completely removing adhering material, then the subsequent moulded article might exhibit substantial surface defects.

The absorbence of said surface material may be measured by placing a known weight of surface material in said monomeric material and measuring the weight gain over time at a fixed temperature. The weight gain over 24 hours of a sample of said surface material, at 25°C, in said monomeric material is less than 10%, preferably less than 8%, more preferably less than 6%, more preferably less than 4%, especially less than 2%.

Preferably, said surface material does not substantially absorb any component of said polymerisable formulation. Each component of said polymerisable formulation may be absorbed to the extent described for said monomeric material.

Said surface material is preferably inherently substantially smooth and/or unpitted. The smooth material may, nonetheless, be arranged to define dimples or other elements if it is desired to produce corresponding features in the moulded article. However, in any case, the surface material which defines the dimples or other elements is preferably substantially smooth as described.

Said surface material is preferably thermoplastic. Said material is preferably essentially linear in structure. Said material is preferably not cross-linked. It is preferably not a rubber. Said material is preferably substantially insoluble in said monomeric material. Said material may be substantially insoluble in cleaning solvents selected from white sprit, acetone and ethylacetate.

Said surface material is preferably a polymeric material and, more preferably, is an organic polymeric material, especially a synthetic organic polymeric material. Said surface material preferably comprises a material which is thermoformable.

Said polymeric material preferably includes a polyalkylene backbone. The backbone may be optionally-substituted but is preferably unsubstituted. Preferably, said polymeric material includes C₂₋₆, more preferably C₂₋₄, especially C₂ or C₃ alkylene repeat moieties in its backbone. Said backbone preferably consists essentially of said moieties described. Said polymeric material may be a homopolymer or co-polymer (which includes random or block copolymers). Where said polymeric material is a co-polymer, it suitably comprises moieties derived from C₂₋₆, preferably C₂₋₄, more preferably C₂₋₃ monomers.

Preferred polymeric materials having a polyalkylene backbone include polyethylene (especially high density polyethylene, suitably having a heat distortion temperature in the range 79-91°C), polypropylene (suitably having a heat distortion temperature in the range 107-121°C) and co-polymers of the aforesaid, especially copolymers of polypropylene (especially having a heat distortion temperature in the range 85-104°C).

Other suitable materials include polyamides, examples of which include Nylon 6 (suitably having a heat distortion temperature of about 80°C) and Nylon 66 (suitably having a heat distortion temperature of about 105°C).

Further suitable materials include polyarylether ketones, especially polyetherether ketone (suitably having a heat distortion temperature of about 140°C).

Said polymeric material may include a filler, for example for reinforcing it. Preferred fillers include fibrous materials, especially inorganic fibrous materials, for example glass fibres. Said polymeric material which includes a polyalkylene backbone may advantageously be filled. An example is polypropylene filled with glass fibres.

Said monomeric material is suitably an acrylic monomer. It may be selected from methylmethacrylate, n-butymethacrylate, n-hexylmethacrylate, n-butylacrylate, 2-ethylhexylacrylate, 2-ethylhexylmethacrylate, ethyleneglycoldimethacrylate and triethyleneglycoldimethacrylate. Said monomeric material is preferably an alkyl (optionally-alkylated) acrylate and, more preferably, is methylmethacrylate.

Said polymerisable formulation may include at least 10wt%, preferably at least 20wt%, more preferably at least 25wt% of said monomeric material. The amount of said monomeric material may be less than 50wt%, preferably less than 40wt%, more preferably less than 35wt%.

Said polymerisable formulation preferably includes one or more acrylic polymers. Such polymers may be of a type derivable from the monomeric materials described above. Acrylic polymers may be poly[alkyl (optionally-alkylated) acrylates] of which poly(methylmethacrylate) and higher methacrylate and acrylate polymers are examples.

The total amount of said acrylic polymers in said polymerisable formulation may be at least 1wt%, preferably at least 2wt%, more preferably at least 3wt%. The amount may be less than 10wt%, preferably less than 7.5wt%, more preferably less than 5wt%. In some cases, however, syrups of higher concentration than the aforesaid may be used, for example of up to 45wt% and typically in the range 30-40wt%, especially where low molecular weight acrylic polymers are used.

Said polymerisable formulation includes a filler. Suitable fillers include natural minerals e.g. quartz, silica, calcium carbonate and alumina trihydrate (ATH). ATH is preferred. Said polymerisable formulation may include at least 30wt%, preferably at least 40wt%, more preferably at least 50wt% of said filler. The amount of said filler may be less than 70wt%, preferably less than 65wt%. A commonly used filler level is about 60 wt%.

Said polymerisable formulation preferably includes granules, suitably comprising polyester or acrylic, (which are optionally filled with the aforementioned fillers (especially ATH)), suitably in an amount of at least 2wt%, preferably at least 5wt%, more preferably at least 8wt%. The amount may be less than 20wt%, preferably less than 16wt%, more preferably less than 12wt%.

Said polymerisable formulation may include a colouring means.

Said polymerisable formulation preferably includes an initiator. Said initiator is preferably arranged to function at ambient temperature suitably within the range 20-25°C. Said initiator is preferably a peroxide, especially an organic peroxide. Examples include lauryl peroxide, benzoyl peroxide, hydroperoxide, alkylperoxide, dibenzoyl peroxide, dilauryl peroxide, t-butyl peroctoate, perbenzoate, perpivalate, permaleinate azobis-isobutylacetate, azobis-isobutyl nitrile, butyl permaleinate peroxide, t-butyl hydroperoxide modified with maleic anhydride, alkyd sulphhydride ester, methyleneglycolthioester, methylethyleneglycolthioacid ester and butyleneglycolthioacid ester.

Said polymerisable formulation may include an accelerator, an example of which is dimethylparatoluidine.

Preferably, in the method, said surface material, more preferably the entirety of said mould, is not heated to effect the curing of the polymerisable formulation. Heat may, however, be applied to the show face of the mould in some circumstances, but as mentioned, preferably heat is focussed on a specified region of the mould, rather than the entire mould being heated. Advantageously, curing in the mould is undertaken at ambient temperature (although of course the mould gets hot due to the exothermic reaction during curing). Preferably, said polymerisable formulation is allowed to cure to at least 90%, more preferably to at least 92%, especially to at least 94% in the mould. The progress of the curing of the polymerisable formulation may be monitored by monitoring the temperature of the polymerisable formulation during its curing. This may be done by contacting the curing polymerisable formulation with a temperature monitoring device or monitoring the temperature of a wall of the mould body. At the start of the curing, the curing formulation and/or mould body is cool; then it gets hot; and thereafter it starts to cool. Suitably, the acrylic moulded article is removed from the mould, suitably by being disengaged from contact with the surface material, after the curing formulation has started to cool. Then the acrylic moulded article is heated in an oven, suitably at a temperature of at least 80°C, preferably at least 90°C, more preferably at least 100°C, especially at least 110°C, to complete its curing.

Advantageously, after removal of the acrylic moulded article from the mould of the first aspect, the mould may be re-used. Thus, the mould is not destructible or destroyed after being used to make an article. Accordingly, the invention extends to a method of making a plurality of acrylic moulded articles which includes making a first article as described according to said first aspect; disengaging the cured first article from contact with said surface material; and contacting the same surface material with polymerisable formulation and allowing the polymerisable formulation to cure to form a second acrylic moulded article.

The acrylic moulded article made in a method described herein may be a kitchen or bathroom article which terms include sinks, worktops, basins, shower trays and baths; a worktop, shop counter, food preparation surface or the like; or a building structure, for example exterior cladding of buildings and walls, for example partitioning walls.

Any feature of any aspect of the invention or embodiment described herein may be combined with any feature of any aspect of any other embodiment described herein as defined in the appended claims.

Specific embodiments of the invention will now be described, by way of example, with reference to the accompanying diagrammatic drawings, in which:
Figure 1 is a top plan view of a worktop mould base;
Figure 2 is a cross-section along line II-II of figure 1;
Figure 3 is an underneath plan view of a worktop mould top arranged to cooperate with the base of Figure 1 to define a mould;
Figure 4 is a cross-section along line IV-IV of figure 3;
Figure 5 is an underneath plan view of another mould; and
Figure 6 is a cross-section along line VI-VI of figure 5.

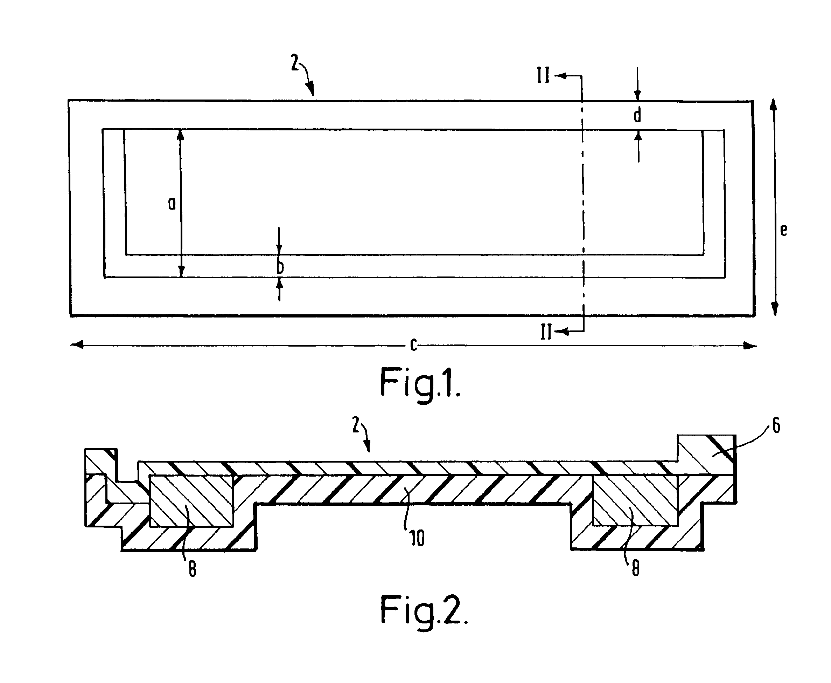

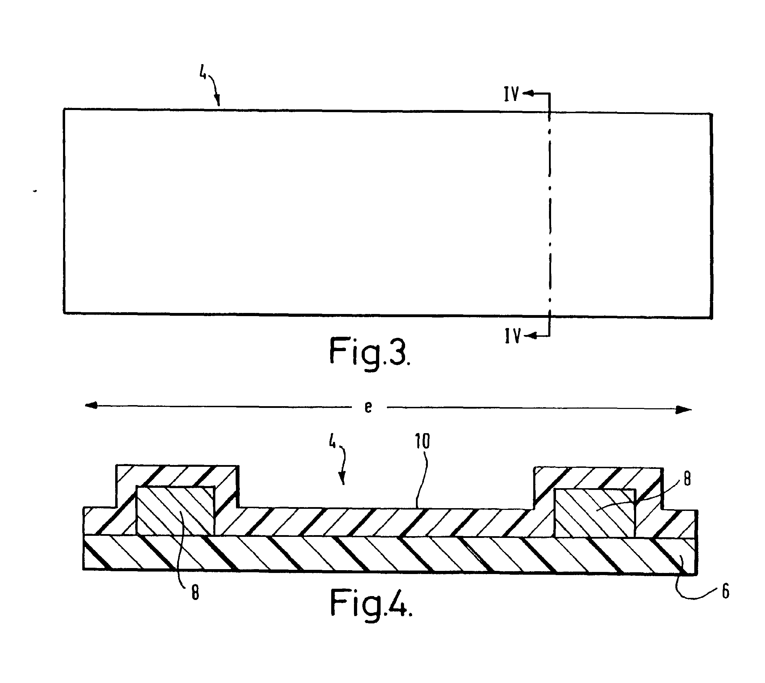

Referring to figures 1 to 4, a mould for moulding an acrylic worktop for a kitchen comprises two mould halves, namely a mould base 2 and a mould top 4 which are arranged to cooperate with one another to define a mould cavity into which polymerisable material may be input. After input of polymerisable material, it is allowed to cure to define a solid product from which the mould base and top may be removed. The product may then be placed in an oven at about 120°C to fully cure it. Thereafter, the product may be finished to provide a saleable worktop as required.

The mould base and top include a layer of composite CELMAR (Trade Mark) material 6 which comprises extruded polypropylene sheet with a polyester fabric laminated to one side. The polyester backing is laid up with glass-reinforced resin. The material can be obtained from Royalite Plastics Ltd, Clwyd, UK. The layer of the composite material 6 of the mould top 4 may be provided by cutting a portion from a sheet of CELMAR material. The layer of material 6 of the mould base 2 may be formed from separate planar portions cut from the sheet, whereby the portions are heated welded together to define the desired cross-section. Stiffening supports 8 abut a rear face of the layers of composite material 6 and define a framework which comprises respective elements which extend longitudinally and transversely across the respective moulds. The supports are arranged to help maintain the rigidity of the moulds and may be made of wood or metal.

A layer 10 of GRP is provided on the rear of the moulds such that it covers the supports 8 and any exposed rear face of the composite material 6. The GRP comprises glass fibre (to BS 3496) and polyester resin (to BS 3532); it is applied by spraying. The GRP serves to maintain the supports 8 in position and adds to the rigidity of the moulds.

The mould shown in figures 1 to 4 has the following dimensions: a = 355 mm; b = 25 mm; c = 2160 mm; d= 70 mm; e = 495 mm.

In use, the mould base and top 2,4 are secured together by clamps (not shown) and a polymerisable formulation described hereinafter is poured into the mould cavity through strategically placed openings (not shown). After curing of the formulation, the base and top 2,4 are disengaged and the product removed. The product may then be fully cured in an oven and finished.

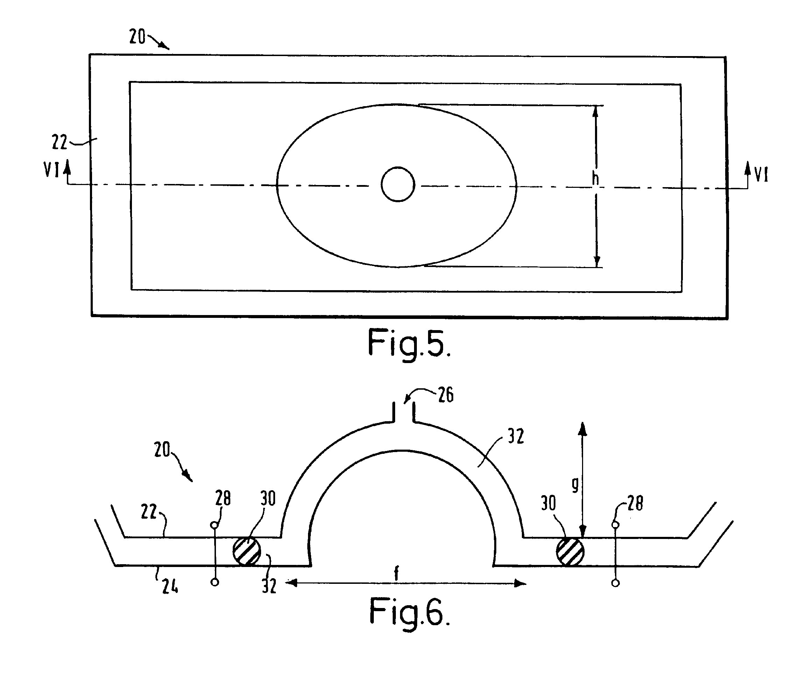

Referring now to figures 5 and 6, the mould 20 is for a vanity unit which comprises a wash basin and surrounding planar worktop. The mould 20 comprises first and second mould halves 22,24. (It will be noted that each mould half is represented by a single line in figure 6, in the interests of clarity).

To manufacture a mould half 22, 24, a proforma is initially made to an appropriate shape. Then, polypropylene sheet is heated up to just below the melt temperature and then sucked by a vacuum onto the proforma so that the polypropylene sheet assumes the shape of the proforma in a "thermoforming" or "vacuum forming" operation. Thereafter, the sheet is allowed to cool on the proforma to below its heat distortion temperature. After removal, from the proforma, the shaped sheet retains the shape of the proforma.

After each mould half 22, 24 has been manufactured as described, an opening 26 may be defined through a wall of mould half 22 and bolt holes (not shown) may be provided at suitable positions so that bolts 28 can be used to releasably secure the mould halves together. In the assembled mould 20, an endless gasket 30 is provided to seal mould cavity 32.

The mould shown in figures 5 and 6 has the following dimensions: f = 400 mm; g = 140 mm; h = 300 mm.

In use, with the mould halves 22, 24 secured together, a polymerisable formulation described hereinafter is poured into the mould 20 via opening 26. After curing of the formulation, the mould halves 22, 24 are disengaged and the product removed. The product may be fully cured in an oven and, thereafter, finished as may be required.

A polymerisable acrylate formulation for use in the moulds described may comprise:
aluminium trihydrate (ATH) - 55.0 wt%
polymethylmethacrylate polymer - 3.4 wt%
ATH filled polyester or acrylic granules - 10.2 wt%
masterbatch colour - 1.7 wt%
methylmethacrylate - 29.7 wt%

The ingredients described above are mixed and placed under a vacuum, to remove air bubbles therefrom which might otherwise result in weak points in the moulded product. Then, a dibenzoyl peroxide initiator (Lucidol BK-50 obtained from AKZO Nobel Chemicals) is added at about 1wt% followed by dimethylpara-toluidine (DMPT) accelerator. The initiator/accelerator system causes polymerisation at ambient temperature. During the polymerisation a typical exotherm (i.e. the maximum temperature of the polymerisable formulation) is a little less than 80°C, although, in some cases, an exotherm of over 100°C may result. The temperature of the polymerisable formulation may be minimised by not insulating the moulds or placing their on an insulating surface. Advantageously, the moulds may be supported, for example on blocks, so that heat may be dissipated readily to the surrounding air.

The mould halves of the moulds described in Figures 1 to 6 are suitably constructed so that they do not distort during the polymerisation. To this end, the composite material 6 and, more particularly, the polypropylene copolymer of the moulds of Figures 1 to 4 and the polypropylene of the mould halves 22, 24 of Figures 5 and 6 suitably has a sufficient high heat distortion temperature to prevent or minimise this.

The heat distortion temperature may be assessed under a load of 0.46 N/mm² and 66 psi as described according to ASTM D648. For polypropylene copolymers it is generally in the range 85 to 104°C.

The polypropylene material which contacts the polymerisable formulation when the moulds described above are used is preferably substantially non-absorbent of the ingredients of the polymerisable formulation, especially the monomer. By selecting a substantially non-absorbent material, the cured product can readily be removed from the mould. If, however, a significant amount of the polymerisable formulation was absorbed by the polypropylene material, then there would be a tendency for the moulded product to stick to the mould.

## Claims

1. A method of making a filled acrylic moulded article, the method using a mould which includes a mould body (2,4) having, as an integral part thereof, a surface material (6), wherein said surface material (6) defines at least part of the shape of the article to be moulded and said surface material (6) includes a polymeric material which has a heat distortion temperature of at least 70°C measured at 0.46 N/m² and 455,054 Pa (66 psi) as described according to ASTM D648 and said surface material does not substantially absorb monomeric material during said method whereby the surface material absorbs less than 10% by wt of monomeric material when the weight gain of a sample of the surface material in monomeric material is measured over 24 hours at 25°C, the method including the step of contacting the surface material (6) of the mould body (2,4) with a polymerisable formulation which includes a filler and a monomeric material arranged to produce an acrylic polymer when polymerised and allowing the polymerisable formulation to cure and form said filled acrylic moulded article, and removing the filled moulded article from the mould body (2,4) by disengaging said filled moulded article from the surface material (6), whilst leaving said surface material (6) as an integral part of said mould body (2,4).

2. A method according to claim 1, wherein said surface material (6) is an integral part of said mould body (2,4) by virtue of it being fixed relative to a support means (8) which is part of said mould body (2,4).

3. A method according to claim 2, wherein a layer of said surface material (6) is fixed relative to a layer of support material and said support material is a component of said support means.

4. A method according to claim 3, wherein said layers define a laminate material.

5. A method according to claim 3 or claim 4, wherein said support material (6) comprises a fibrous material.

6. A method according to any of claims 3 to 5, wherein said support material (6) comprises glass fibre.

7. A method according to any of claims 2 to 6, wherein said support means (8) includes a support frame which is fixed relative to said surface material (6).

8. A method according to claim 3 or claim 4, wherein said support means (8) includes a reinforcing material (10) which is a reinforced plastics material, said reinforcing material (10) is adhered to said support material and said support material and said reinforcing material include at least one common material.

9. A method according to claim 1, wherein said surface material (6) is an integral part of the mould body (2,4) by virtue of it being part of a self-supporting material which defines, at least in part, the shape of the article to be moulded.

10. A method according to claim 9, wherein said self-supporting material defines the surface of the mould body (2,4) contacted with said polymerisable formulation.

11. A method according to claim 9 or claim 10, wherein said self-supporting material defines a mould half.

12. A method according to any of claims 9 to 11, wherein said mould body (2,4) is manufacturable by thermo-forming.

13. A method according to any of claims 9 to 12, wherein the thickness of said surface material (6) is in the range 2 mm to 10 mm.

14. A method according to any preceding claim, wherein the heat distortion temperature of said surface material (6) measured at 0.46 N/m² and 455,054 Pa (66 psi) as described according to ASTM D648 is at least 74°C.

15. A method according to any preceding claim, wherein said polymeric material of said surface material (6) includes a polyalkylene back-bone.

16. A method according to any preceding claim, wherein a polymeric material of said surface material (6) is selected from polyethylene, polypropylene and copolymers of the aforesaid.

17. A method according to any of claims 1 to 15, wherein a polymeric material of said surface material (6) is selected from polyamides and polyaryletherketones.

18. A method according to any preceding claim, wherein, in the method, to effect the curing of the polymerisable formulation heating is applied to a specific region of the mould (2,4).

19. A method according to any preceding claim, wherein curing in the mould (2,4) is undertaken at ambient temperature.

20. A method according to claim 19, wherein the filled acrylic moulded article is removed from the mould (2,4) and then heated in an oven.

21. A method as claimed in any one of the preceding claims, wherein said filler is present in an amount of at least 30 wt% of said polymerisable formulation.

22. A method as claimed in any one of the preceding claims, wherein said filler comprises a natural mineral filler, preferably alumina trihydrate.

23. A method as claimed in any one of the preceding claims, wherein said polymerisable formulation comprises polyester or acrylic granules.

24. A method as claimed in any one of the preceding claims, wherein said monomeric material comprises methyl methacrylate.

25. A method as claimed in any one of the preceding claims, wherein said filled acrylic article is selected from a kitchen article, a bathroom article or a building structure.

26. A method of making a plurality of filled acrylic moulded articles which includes making a first article in a method as described according to any of Claims 1 to 25; disengaging the cured first article from contact with said surface material (6); and contacting the same surface material (6) with polymerisable formulation and allowing the polymerisable formulation to cure to form a second filled acrylic moulded article.

## Patentansprüche

1. Verfahren zur Herstellung eines gefüllten Acrylformteils, wobei bei dem Verfahren eine Form verwendet wird, die einen Formkörper einschließt (2,4), der als integralen Teil desselben ein Oberflächenmaterial (6) aufweist, wobei das Oberflächenmaterial (6) mindestens einen Teil der Gestalt des zu verformenden Teils definiert und das Oberflächenmaterial (6) ein polymeres Material einschließt, das eine Wärmeformbeständigkeit von mindestens 70 °C bei 0,46 N/m² und 455.054 Pa (66 psi) gemessen, wie ASTM D648 entsprechend beschrieben, aufweist, und das Oberflächenmaterial während des Verfahrens monomeres Material nicht wesentlich absorbiert, wobei das Oberflächenmaterial weniger als 10 Gew.-% des monomeren Materials absorbiert, wenn die Gewichtszunahme einer Probe des Oberflächenmaterials an monomerem Material über 24 Stunden bei 25 °C gemessen wird, wobei das Verfahren den Schritt des Kontaktierens des Oberflächenmaterials (6) des Formkörpers (2, 4) mit einer polymerisierbaren Rezeptur, die einen Füllstoff und ein monomeres Material einschließt, das angeordnet ist, um beim Polymerisieren ein Acrylpolymer zu bilden, und des Gestattens, dass die polymerisierbare Rezeptur sich aushärtet und das gefüllte Acrylformteil bildet, und des Entfernens des gefüllten Formteils aus dem Formkörper (2, 4) durch Loslösen des gefüllten Formteils von dem Oberflächenmaterial (6), während das Oberflächenmaterial (6) als integraler Teil des Formkörpers (2, 4) zurückgelassen wird, einschließt.

2. Verfahren nach Anspruch 1, wobei das Oberflächenmaterial (6) ein integraler Teil des Formkörpers (2, 4) **dadurch** ist, dass es mit Bezug auf eine Stützvorrichtung (8), die Teil des Formkörpers (2, 4) ist, befestigt ist.

3. Verfahren nach Anspruch 2, wobei eine Schicht des Oberflächenmaterials (6) mit Bezug auf eine Schicht Stützmaterial befestigt ist und das Stützmaterial eine Komponente der Stützvorrichtung ist.

4. Verfahren nach Anspruch 3, wobei die Schichten ein Laminatmaterial definieren.

5. Verfahren nach Anspruch 3 oder Anspruch 4, wobei das Stützmaterial (6) ein faseriges Material umfasst.

6. Verfahren nach einem der Ansprüche 3 bis 5, wobei das Stützmaterial (6) Glasfaser umfasst.

7. Verfahren nach einem der Ansprüche 2 bis 6, wobei die Stützvorrichtung (8) einen Stützrahmen einschließt, der mit Bezug auf das Oberflächenmaterial (6) befestigt ist.

8. Verfahren nach Anspruch 3 oder Anspruch 4, wobei die Stützvorrichtung (8) ein Verstärkungsmaterial (10) einschließt, das ein verstärktes Kunststoffmaterial ist, wobei das Verstärkungsmaterial (10) an dem Stützmaterial anhaftet und das Stützmaterial und das Verstärkungsmaterial mindestens ein gemeinsames Material einschließen.

9. Verfahren nach Anspruch 1, wobei das Oberflächematerial (6) ein integraler Teil des Formkörpers (2,4) **dadurch** ist, dass es Teil eines selbsttragenden Materials ist, das die Gestalt des zu formenden Teils mindestens teilweise definiert.

10. Verfahren nach Anspruch 9, wobei das selbsttragende Material die Oberfläche des Formkörpers (2, 4) definiert, der mit der polymerisierbaren Rezeptur in Kontakt gebracht wird.

11. Verfahren nach Anspruch 9 oder Anspruch 10, wobei das selbsttragende Material eine Formhälfte definiert.

12. Verfahren nach einem der Ansprüche 9 bis 11, wobei der Formkörper (2, 4) durch Warmverformen hergestellt wird.

13. Verfahren nach einem der Ansprüche 9 bis 12, wobei die Dicke des Oberflächenmaterials (6) im Bereich von 2 mm bis 10 mm liegt.

14. Verfahren nach einem der vorhergehenden Ansprüche, wobei die Wärmeformbeständigkeit des Oberflächenmaterials (6) bei 0,46 N/m² und 455.054 Pa (66 psi) gemessen, wie ASTM D648 entsprechend beschrieben, mindestens 74 °C beträgt.

15. Verfahren nach einem der vorhergehenden Ansprüche, wobei das polymere Material des Oberflächenmaterials (6) eine Polyalkylenrückgratkette einschließt.

16. Verfahren nach einem der vorhergehenden Ansprüche, wobei ein polymeres Material des Oberflächenmaterials (6) aus Polyethylen, Polypropylen und Copolymeren derselben ausgewählt ist.

17. Verfahren nach einem der Ansprüche 1 bis 15, wobei ein polymeres Material des Oberflächenmaterials (6) aus Polyamiden und Polyaryletherketonen ausgewählt wird.

18. Verfahren nach einem der vorhergehenden Ansprüche, wobei bei dem Verfahren zum Durchführen des Aushärtens der polymerisierbaren Rezeptur Hitze auf einen spezifischen Bereich der Form (2, 4) aufgebracht wird.

19. Verfahren nach einem der vorhergehenden Ansprüche, wobei das Aushärten in der Form (2, 4) bei Raumtemperatur ausgeführt wird.

20. Verfahren nach Anspruch 19, wobei das gefüllte Acrylformteil aus der Form (2, 4) entfernt und dann in einem Ofen erhitzt wird.

21. Verfahren nach einem der vorhergehenden Ansprüche, wobei der Füllstoff in einer Menge von mindestens 30 Gew.-%, auf die polymerisierbare Rezeptur bezogen, vorliegt.

22. Verfahren nach einem der vorhergehenden Ansprüche, wobei der Füllstoff einen natürlichen Mineralfüllstoff, bevorzugt Aluminiumoxidtrihydrat umfasst.

23. Verfahren nach einem der vorhergehenden Ansprüche, wobei die polymerisierbare Rezeptur Polyester-oder Acrylgranulat umfasst.

24. Verfahren nach einem der vorhergehenden Ansprüche, wobei das monomere Material Methylmethacrylat umfasst.

25. Verfahren nach einem der vorhergehenden Ansprüche, wobei das gefüllte Acrylteil aus einem Küchengegenstand, einem Badezimmergegenstand oder einer Baustruktur ausgewählt wird.

26. Verfahren zur Herstellung mehrerer gefüllter Acrylformteile, das das Herstellen eines ersten Teils durch ein Verfahren, wie es irgendeinem der Ansprüche 1 bis 25 entsprechend beschrieben ist; das Lösen des ersten ausgehärteten Teils aus dem Kontakt mit dem Oberflächenmaterial (6); und das Kontaktieren des gleichen Oberflächenmaterials (6) mit polymerisierbarer Rezeptur und das Aushärtenlassen der polymerisierbaren Rezeptur unter Bildung eines zweiten gefüllten Acrylformteils einschließt.

## Revendications

1. Procédé de fabrication d'un article moulé acrylique à charge, le procédé utilisant un moule qui inclut un corps de moule (2,4) ayant, en tant que partie intégrale de ce dernier, un matériau de surface (6), dans lequel ledit matériau de surface (6) définit au moins une partie de la forme de l'article à mouler et dans lequel ledit matériau de surface (6) inclut un matériau polymère qui a une température de distorsion à la chaleur d'au moins 70°C, mesurée sous une pression de 0,46 N/m² et 455.054 Pa (66 livres par pouce au carré), comme décrit selon la norme ASTM D648, et dans lequel ledit matériau de surface n'absorbe pas substantiellement un matériau monomère pendant ledit procédé, étant donné que le matériau de surface absorbe moins de 10% en poids du matériau monomère lorsque le gain en poids d'un échantillon du matériau de surface dans le matériau monomère est mesuré pendant 24 heures à la température de 25°C, le procédé incluant l'étape de mise en contact du matériau de surface (6) du corps de moule (2,4) avec une formulation polymérisable qui comprend une charge et un matériau monomère arrangé pour produire un polymère acrylique une fois polymérisé et permettant à la formulation polymérisable de se durcir et de former ledit article moulé acrylique à charge et permettant de retirer l'article moulé du corps de moule (2,4) en désengageant ledit article moulé à charge du matériau de surface (6), tout en laissant ledit matériau de surface (6) en tant que partie intégrale dudit corps de moule (2,4).

2. Procédé selon la revendication 1, dans lequel ledit matériau de surface (6) est une partie intégrale dudit corps de moule (2,4) en raison de sa fixation par rapport à un moyen de support (8) qui fait partie dudit corps de moule (2,4).

3. Procédé selon la revendication 2, dans lequel une couche dudit matériau de surface (6) est fixée par rapport à une couche de matériau de support et dans lequel ledit matériau de support est un composant dudit moyen de support.

4. Procédé selon la revendication 3, dans lequel lesdites couches définissent un matériau de stratifié.

5. Procédé selon la revendication 3 ou la revendication 4, dans lequel ledit matériau de support (6) comprend un matériau fibreux.

6. Procédé selon l'une quelconque des revendications 3 à 5, dans lequel ledit matériau de support (6) comprend une fibre de verre.

7. Procédé selon l'une quelconque des revendications 2 à 6, dans lequel ledit moyen de support (8) comprend un cadre de support qui est fixé par rapport audit matériau de surface (6).

8. Procédé selon la revendication 3 ou la revendication 4, dans lequel ledit moyen de support (8) comprend un matériau de renforcement (10) qui est un matériau renforcé en matière plastique, dans lequel ledit matériau de renforcement (10) en matière plastique adhère audit matériau de support et dans lequel ledit matériau de support et ledit matériau de renforcement comprennent au moins un matériau commun.

9. Procédé selon la revendication 1, dans lequel ledit matériau de surface (6) est une partie intégrale dudit corps de moule (2,4) en raison de son appartenance à un matériau auto-supportant qui définit, au moins en partie, la forme de l'article à mouler.

10. Procédé selon la revendication 9, dans lequel ledit matériau auto-supportant définit la surface du corps de moule (2,4) en contact avec ladite formulation polymérisable.

11. Procédé selon la revendication 9 ou la revendication 10, dans lequel ledit matériau de support définit une moitié de moule.

12. Procédé selon l'une quelconque des revendications 9 à 11, dans lequel ledit corps de moule (2,4) peut être fabriqué par thermoformage.

13. Procédé selon l'une quelconque des revendications 9 à 12, dans lequel l'épaisseur dudit matériau de surface (6) est dans le domaine de 2 mm à 10 mm.

14. Procédé selon l'une quelconque des revendications précédentes, dans lequel la température de distorsion à la chaleur dudit matériau de surface (6) mesurée sous une pression de 0,46 N/m² et 455.054 Pa (66 livres par pouce au carré), comme décrit dans la norme ASTM D648, est d'au moins 74°C.

15. Procédé selon l'une quelconque des revendications précédentes, dans lequel ledit matériau polymère dudit matériau de surface (6) comprend un squelette de polyalcylène.

16. Procédé selon l'une quelconque des revendications précédentes, dans lequel un matériau polymère dudit matériau de surface (6) est sélectionné parmi le polyéthylène, le polypropylène et des copolymères de ces derniers.

17. Procédé selon l'une quelconque des revendications 1 à 15, dans lequel un matériau polymère dudit matériau de surface (6) est sélectionné parmi les polyamides et les polyaryléthercétones.

18. Procédé selon l'une quelconque des revendications précédentes, dans lequel, dans le procédé, en vue d'effectuer le durcissement de la formulation polymérisable, on applique un chauffage à une région spécifique du moule (2,4).

19. Procédé selon l'une quelconque des revendications précédentes, dans lequel le durcissement dans le moule (2,4) est effectué à la température ambiante.

20. Procédé selon la revendication 19, dans lequel l'article moulé acrylique à charge est retiré du moule (2,4) et est alors chauffé dans un four.

21. Procédé selon l'une quelconque des revendications précédentes, dans lequel ladite charge est présente dans une quantité d'au moins 30 % en poids de ladite formulation polymérisable.

22. Procédé selon l'une quelconque des revendications précédentes, dans lequel ladite charge comprend une charge minérale naturelle, de préférence, le trihydrate d'alumine.

23. Procédé selon l'une quelconque des revendications précédentes, dans lequel ladite formulation polymérisable comprend des granules en polyester ou des granules acryliques.

24. Procédé selon l'une quelconque des revendications précédentes, dans lequel ledit matériau monomère comprend le méthacrylate de méthyle.

25. Procédé selon l'une quelconque des revendications précédentes, dans lequel ledit article acrylique à charge est sélectionné parmi un article de cuisine, un article de salle de bain ou une structure pour construction.

26. Procédé de fabrication d'une pluralité d'articles moulés acryliques à charge, qui comprend la fabrication d'un premier article dans un procédé comme décrit selon l'une quelconque des revendications 1 à 25; de désengagement du premier article durci du contact avec ledit matériau de surface (6); et de mise en contact du même matériau de surface (6) avec une formulation polymérisable et de durcissement de la formulation polymérisable en vue de former un deuxième article moulé acrylique à charge.
